# EUROPEAN PATENT APPLICATION

(11) **EP 4 582 792 A1**
(43) Date of publication of application: **09.07.2025**
(21) Application number: 23860871.5
(22) Date of filing: 30.08.2023
(51) Int. Cl.: G01N 21/88, G01N 21/95, G01B 11/08, G01B 11/22, G01B 11/24, G06T 7/00, G06T 7/11, G06T 7/30, G06T 7/50, G06T 11/00

(54) **DATA PROCESSING METHOD AND DEVICE FOR BATTERY APPEARANCE INSPECTION**

(30) Priority: 31.08.2022 KR 20220109760; 16.06.2023 KR 20230077509
(71) Applicant: LG Energy Solution, Ltd., Seoul 07335 (KR)
(72) Inventor: KIM, Tae Young, Daejeon 34122 (KR); JEON, Hyoseung, Daejeon 34122 (KR)
(74) Representative: Goddar, Heinz J.
(86) International application number: PCT/KR2023/012875
(87) International publication number: WO 2024/049195

(57) **Abstract**

A data processing apparatus for visual inspection of batteries may include at least one processor; and a memory configured to store at least one instruction executed by the at least one processor.

Here, the at least one instruction may include an instruction to generate a first image which visually presents a battery surface based on a captured image of an outer surface of a battery; an instruction to generate a second image in which depth information of the outer surface of the battery is visually presented by matching the first image with three-dimensional shape data about the outer surface of the battery; and an instruction to output one or more of the first image and the second image through a predefined graphical user interface (GUI).

## Description

### [Technical Field]

This application claims priority to and the benefit of Korean Patent Application No.10-2022-0109760 filed in the Korean Intellectual Property Office on August 31, 2022 and Korean Patent Application No.10-2023-0077509 filed in the Korean Intellectual Property Office on June 16, 2023, the entire contents of which are incorporated herein by reference.

The present invention relates to a data processing apparatus and method for appearance inspection of batteries, and more particularly, to a data processing apparatus and method for appearance inspection of batteries with improved visual inspection efficiency.

### [Background Art]

Secondary batteries, capable of recharging and reuse, are manufactured as battery modules or packs by connecting multiple battery cells in series based on the required output capacity, serving as power sources for diverse applications. These batteries are used in small, high-tech electronic devices like smart phones, as well as a variety of fields including electric bicycles, electric vehicles, and energy storage systems (ESS).

Secondary batteries may be categorized into can-type batteries, where the electrode assembly is housed within a cylindrical metal can, and pouch-type batteries, where the electrode assembly is contained in a pouch-shaped case. Typically, cylindrical can-type batteries are recognized for their relatively large capacity and robust structural stability.

For a cylindrical battery, a manufacturing process may include an electrode preparation process, an electrode assembly manufacturing process, an electrode assembly packaging process, and a can assembly bonding process, and the manufactured cylindrical battery then undergoes a quality inspection process before its final shipment.

In the defect inspection process for the exterior of the battery, a two-dimensional image-based inspection method for the exterior of the battery is mainly used. Specifically, an operator checks the two-dimensional image of the outer surface of the battery displayed on the display device and determines whether there is a defect in a specific area to determine whether it is defective. Here, as it is judged whether the exterior of the battery is defective based on a plane image, which leads to a limit in terms of inspection accuracy and thus, the inspection time may be elongated.

As a technology to solve the above problems, an appropriate visual inspection technology is needed to more accurately and quickly determine whether the appearance of the battery is defective.

### [Detailed Description of the Invention]

### [Technical Problem]

To obviate one or more problems of the related art, embodiments of the present disclosure provide a data processing apparatus for visual inspection of battery.

To obviate one or more problems of the related art, embodiments of the present disclosure also provide a data processing method performed by the data processing apparatus.

### [Technical Solution]

In order to achieve the objective of the present disclosure, a data processing apparatus for visual inspection of batteries may include at least one processor; and a memory configured to store at least one instruction executed by the at least one processor.

Here, the at least one instruction may include an instruction to generate a first image which visually presents a battery surface based on a captured image of an outer surface of a battery; an instruction to generate a second image in which depth information of the outer surface of the battery is visually presented by matching the first image with three-dimensional shape data about the outer surface of the battery; and an instruction to output one or more of the first image and the second image through a predefined graphical user interface (GUI).

The instruction to generate the first image may include an instruction to receive a two-dimensional image of an outer lateral surface of a cylindrical battery; and an instruction to flatten the outer lateral surface of a cylindrical shape by applying a predefined distortion correction algorithm to the received two-dimensional image.

The instruction to generate the second image may include an instruction to calculate depth information for each plane coordinate of the first image using the 3D shape data; and an instruction to generate the second image by mapping the calculated depth information to each of the plane coordinates.

The second image may be a two-dimensional image in which depth information on the outer surface of the battery is represented in color.

The instruction to output one or more of the first image and the second image through the GUI may include an instruction to output one or more of the first image, the second image, and a third image in which the first image and the second image are overlapped, according to an image output mode selected by a user.

The third image may be an image that is visualized with the second image overlapped to the first image with a preset transparency.

The instruction to output one or more of the first image and the second image through the GUI may include an instruction to, upon receiving a selection signal for the specific point in an output image, output a depth value for a specific point through the GUI.

The instruction to output one or more of the first image and the second image through the GUI may include an instruction to generate and output a fourth image in which a tray containing a plurality of batteries is visualized; and an instruction to, upon receiving a selection signal for a specific battery in the fourth image, output the first image or the second image for a specific battery corresponding to the selection signal.

The instruction to generate and output a fourth image may include an instruction to visualize and output a battery determined to be defective and a normal battery to be distinguished from each other.

The at least one instruction may include an instruction to calculate an outer diameter value for a cylindrical battery using the three-dimensional shape data; an instruction to generate one or more of a fifth image in which the calculated outer diameter value is visualized in the form of a horizontal cross section and a sixth image in which the calculated outer diameter value is visualized in the form of a vertical cross section; and an instruction to output one or more of the fifth image and the sixth image through the GUI.

The instruction to output one or more of the fifth image and the sixth image through the GUI may include an instruction to visualize reference information, including one or more of the minimum value, the maximum value, an average value of the calculated outer diameter values, and the upper specification limit and lower specification limit for the outer diameter value, and an instruction to output the reference information by overlapping the reference information with the output image.

According to another embodiment of the present disclosure, a data processing method for visual inspection of batteries may include generating a first image which visually presents a battery surface based on a captured image of an outer surface of a battery; generating a second image in which depth information of the outer surface of the battery is visually presented by matching the first image with three-dimensional shape data about the outer surface of the battery; and outputting one or more of the first image and the second image through a predefined graphical user interface (GUI).

The generating the first image may include receiving a two-dimensional image of an outer lateral surface of a cylindrical battery; and flattening the outer lateral surface of a cylindrical shape by applying a predefined distortion correction algorithm to the received two-dimensional image.

The generating the second image may include calculating depth information for each plane coordinate of the first image using the 3D shape data; and generating the second image by mapping the calculated depth information to each of the plane coordinates.

The second image may be a two-dimensional image in which depth information on the outer surface of the battery is represented in color.

The outputting one or more of the first image and the second image through the GUI may include outputting one or more of the first image, the second image, and a third image in which the first image and the second image are overlapped, according to an image output mode selected by a user.

The third image may be an image that is visualized with the second image overlapped to the first image with a preset transparency.

The outputting one or more of the first image and the second image through the GUI may include upon receiving a selection signal for the specific point in an output image, outputting a depth value for a specific point through the GUI.

The outputting one or more of the first image and the second image through the GUI may include generating and outputting a fourth image in which a tray containing a plurality of batteries is visualized; and upon receiving a selection signal for a specific battery in the fourth image, outputting the first image or the second image for a specific battery corresponding to the selection signal.

The generating and outputting a fourth image may include visualizing and outputting a battery determined to be defective and a normal battery to be distinguished from each other.

The data processing method may further include calculating an outer diameter value for a cylindrical battery using the three-dimensional shape data; generating one or more of a fifth image in which the calculated outer diameter value is visualized in the form of a horizontal cross section and a sixth image in which the calculated outer diameter value is visualized in the form of a vertical cross section; and outputting one or more of the fifth image and the sixth image through the GUI.

The outputting one or more of the fifth image and the sixth image through the GUI may include visualizing reference information, including one or more of the minimum value, the maximum value, an average value of the calculated outer diameter values, and the upper specification limit and lower specification limit for the outer diameter value, and outputting the reference information by overlapping the reference information with the output image.

### [Advantageous Effects]

According to embodiments of the present disclosure, the accuracy and time efficiency of visual inspection of battery can be further improved.

### [Brief Description of the Drawings]

FIG. 1 is a block diagram of an visual inspection system according to embodiments of the present invention.
FIG. 2 is an operation flowchart of a data processing method performed by a visual inspection apparatus according to embodiments of the present invention.
FIG. 3 is a reference diagram for explaining a method of generating a first image according to embodiments of the present invention.
FIG. 4 is a reference diagram for explaining a method of generating a second image according to embodiments of the present invention.
FIG. 5 is an example of a screen of a display device for explaining a diagnostic image according to embodiments of the present invention.
FIGS. 6 to 13 are examples of screens for explaining image output modes and images output in each mode according to embodiments of the present invention.
FIG. 14 is a block diagram of a data processing apparatus according to embodiments of the present invention.

100: visual inspection system
110: 2D camera
120: 3D scanner
130: visual inspection apparatus
510: window for mode selection
520: window for diagnostic image output

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

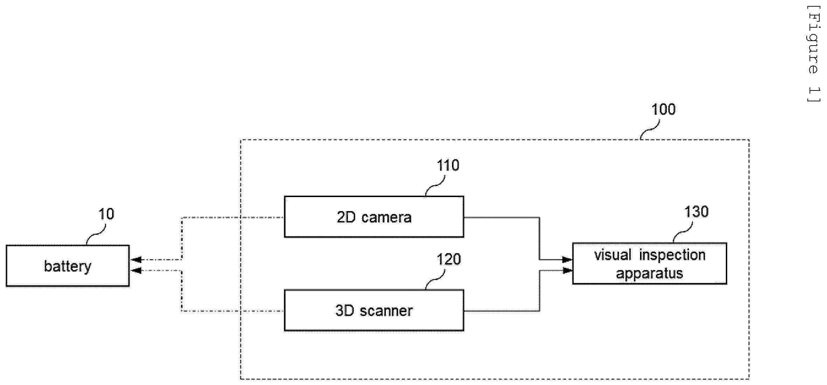

FIG. 1 is a block diagram of a visual inspection system according to embodiments of the present invention.

The visual inspection system 100 according to the present invention may be used in a process step of inspecting the appearance of the battery 10 for defects. The visual inspection system may include a loading device for loading batteries, a transport device for transporting the loaded batteries to a specific location, a 2D camera 110 that photographs the outer surface of the battery at the specific location, and a 3D scanner 120 that generates three-dimensional shape data from the outer surface of the battery, and a visual inspection apparatus 130 that inspects appearance defects using the generated image.

The inspection object of the visual inspection system according to the present invention may be a cylindrical battery, but the scope of the present invention is not limited thereto.

The 2D camera 110 is a device that produces a two-dimensional image by photographing the outer surface of the battery 10. Here, the 2D camera 110 may be arranged and configured at a specific location of an inspection facility to photograph one or more of the outer lateral surface, upper surface, and lower surface of the cylindrical battery.

The 3D scanner 120 is a device that generates three-dimensional shape data about the outer surfaces of the battery 10. For example, the 3D scanner 120 may correspond to an optical shape profile device that generates a three-dimensional data set of a cylindrical battery. Here, the 3D scanner 120 may be configured to be placed at a specific location of the inspection facility to generate three-dimensional shape data for one or more of the outer lateral surface, the upper surface, and the lower surface of the cylindrical battery.

The visual inspection apparatus 130 may receive a two-dimensional captured image from the 2D camera 110 and three-dimensional shape data from the 3D scanner 120.

The visual inspection apparatus 130 may process the received two-dimensional captured image and three-dimensional shape data according to a predefined data processing process to generate one or more inspection images. Thereafter, the visual inspection apparatus 130 may output one or more generated inspection images through a predefined Graphical User Interface (GUI).

The display device may be included in the visual inspection apparatus 130 or may be connected to the visual inspection apparatus 130 through a network and output the generated inspection image through a predefined GUI. An operator may check the output inspection images to identify one or more of defects, defective items, and defect locations of the battery 10, and perform appearance inspection of the battery.

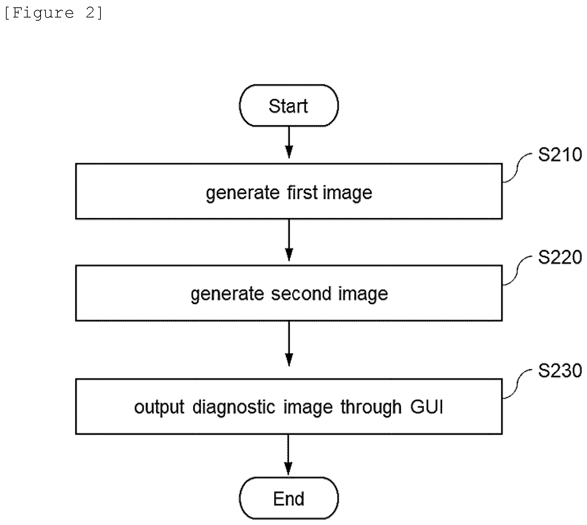

FIG. 2 is an operational flowchart of a data processing method performed by a visual inspection apparatus according to embodiments of the present invention.

The visual inspection apparatus may generate a first image that visually represents the battery surface based on a captured image of the outer surface of the battery (S210). Here, the first image may correspond to a two-dimensional image of a predefined size generated based on an image captured by a 2D camera.

In the embodiments, the visual inspection apparatus may receive a two-dimensional image of the outer lateral surface of the battery from a 2D camera, apply a predefined distortion correction algorithm to the received two-dimensional image, flatten the outer lateral surface, and produce a first image.

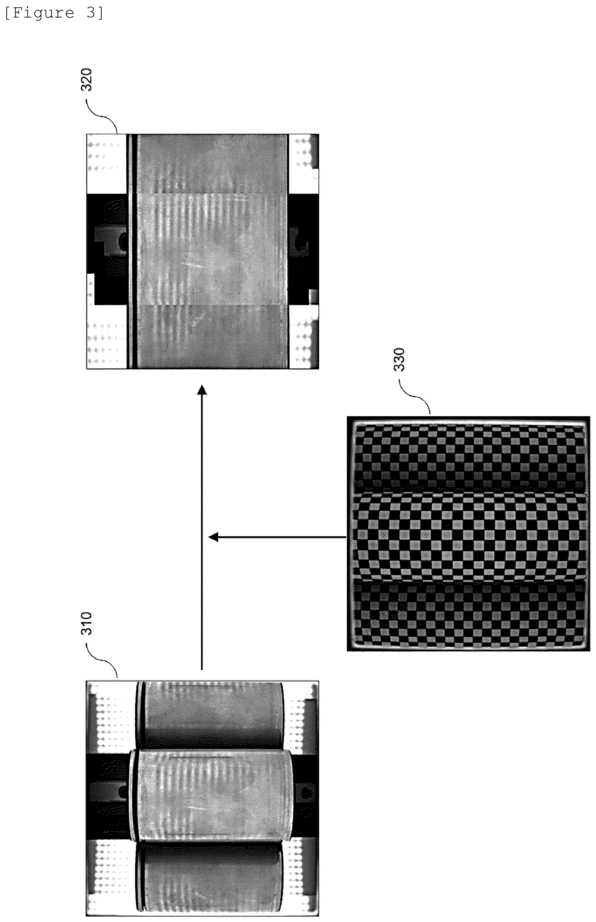

FIG. 3 is a reference diagram for explaining a method of generating a first image according to embodiments of the present invention. Referring to FIG. 3, the visual inspection apparatus may receive a two-dimensional image 310 of the outer lateral surface of a cylindrical battery from a 2D camera. Thereafter, the visual inspection apparatus may apply a predefined distortion correction algorithm to the received two-dimensional image 310 to correct the cylindrical outer lateral surface to be planarized, thereby generating the first image 320. Here, the visual inspection apparatus may correct the distortion of the two-dimensional image 310 based on the captured image 330 of a dummy can that has the same specifications as the battery to be inspected. For example, the visual inspection apparatus may correct the captured image 310 of the battery using a distortion correction algorithm that planarizes distorted grid pattern in the captured image 330 of a dummy can which has a grid pattern formed on the outer surface, thereby generating the first image 320.

In the embodiments, the visual inspection apparatus may apply a distortion correction algorithm to the captured image 310 to correct the cylindrical lateral outer surface to be plane, may convert the corrected two-dimensional image to a predefined size or extract a predefined area from the corrected two-dimensional image, and may generate the first image.

Referring again to FIG. 2, the visual inspection apparatus may generate a second image in which depth information on the outer surface of the battery is visually expressed by matching the 3D shape data for the outer surface of the battery and the first image (S220). Here, the second image has the same size as that of the first image and may correspond to a two-dimensional image in which depth information is mapped to each plane coordinate. In an embodiment, the second image may correspond to a two-dimensional image in which depth information of the outer surface of the battery is expressed in color.

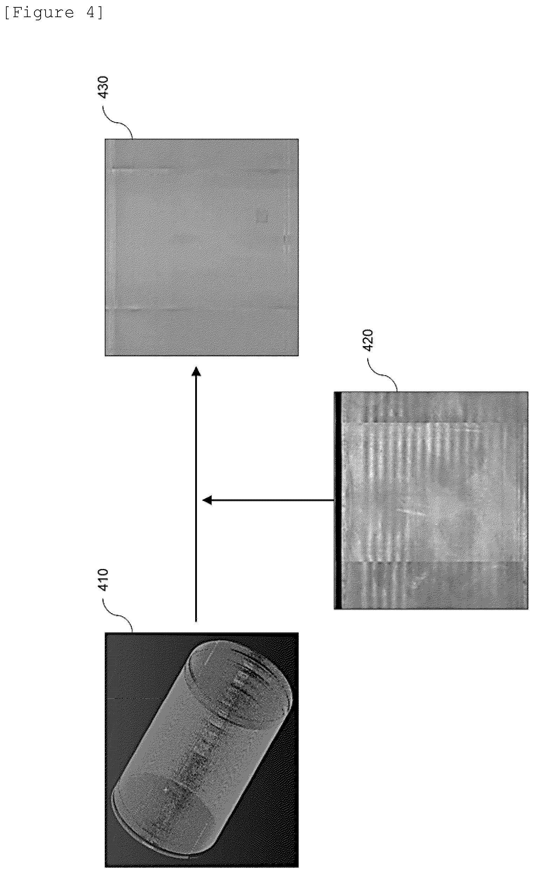

FIG. 4 is a reference diagram for explaining a method of generating a second image according to embodiments of the present invention. Referring to FIG. 4, the visual inspection apparatus may receive 3D shape data 410 for a cylindrical battery from a 3D scanner. Thereafter, the visual inspection apparatus may calculate depth information for each of the plane coordinates (X, Y) of the first image 420 using the received 3D shape data 410. Here, the visual inspection apparatus may calculate depth information for each of the plane coordinates (X, Y) of the first image 420 based on a virtual plane in contact with the outer surface of the cylinder. Thereafter, the visual inspection apparatus may map the calculated depth information to each plane coordinate of the first image 420 to generate the second image 430. Here, the second image 430 may be implemented as a two-dimensional image expressed in different colors for each depth value.

Referring again to FIG. 2, the visual inspection apparatus may output a diagnostic image through a predefined GUI (S230). Here, the diagnostic image may include one or more of the first image and the second image. In other words, the visual inspection apparatus may output one or more of the first image and the second image as a diagnostic image and support a user to perform an appearance defect inspection based on the output diagnostic image.

In the embodiments, the diagnostic image may further include a third image in which the first image and the second image are overlapped. Here, the third image may be an image that is visualized by overlapping the second image with a preset transparency on the first image.

In the embodiments, the diagnostic image may further include a fourth image in which a tray containing a plurality of batteries is visualized. Here, the fourth image may include icons corresponding to each of the batteries, and the icons may be arranged to correspond to the arrangement structure of the batteries on the tray.

In the embodiments, the diagnostic image may further include one or more of a fifth image in which outer diameter information about the cylindrical battery is visualized in the form of a horizontal cross-section and a sixth image in which outer diameter information about the cylindrical battery is visualized in the form of a vertical cross-section.

In the following, diagnostic images according to various embodiments of the present invention will be described in more detail.

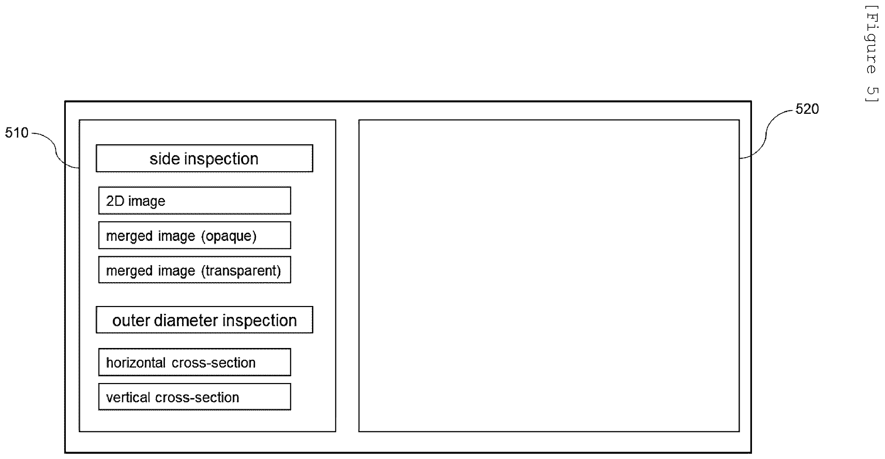

FIG. 5 is an example of a screen of a display device for explaining a diagnostic image according to embodiments of the present invention.

Referring to FIG. 5, the visual inspection apparatus may visualize and output one or more of the first to fifth images through a display device, depending on an image output mode selected by a user.

In the embodiments, the GUI may be configured to include one or more of a window for mode selection 510 and a window for diagnostic image output 510.

The visual inspection apparatus may receive a selection signal for one or more of the inspection mode and image output mode input by the user through the window for mode selection 510.

The inspection mode may include one or more of a side inspection mode and an outer diameter inspection mode. In the side inspection mode, the image output mode may include one or more of a 2D image output mode, an **opaque** merged image output mode, and a transparent merged image output mode. Additionally, in the outer diameter inspection mode, the image output mode may include one or more of a horizontal cross-sectional image output mode and a vertical cross-sectional image output mode.

The visual inspection apparatus may output a diagnostic image corresponding to the inspection mode and the image output mode selected by the user through the window for diagnostic image output 520.

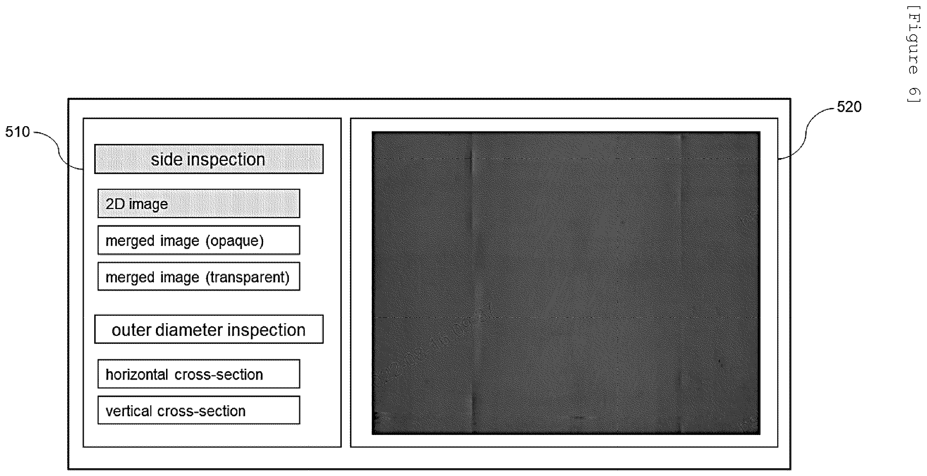

FIGS. 6 to 13 are examples of screens for explaining image output modes and images output in each mode according to embodiments of the present invention.

FIGS. 6 is an example of a screen when [2D image output mode] of the side inspection mode is selected. Referring to FIG. 6, when a selection signal for [2D image output mode] is received, the visual inspection apparatus may output the first image of the outer lateral surface area of the cylindrical battery through the window for diagnostic image output 520. Meanwhile, although FIG. 6 shows a screen on which the first image of the outer surface of the battery is output, but the first image of the upper surface or the lower surface of the battery may be output, or the first images of the outer lateral surface, the upper surface, and the lower surface of the battery may be output together.

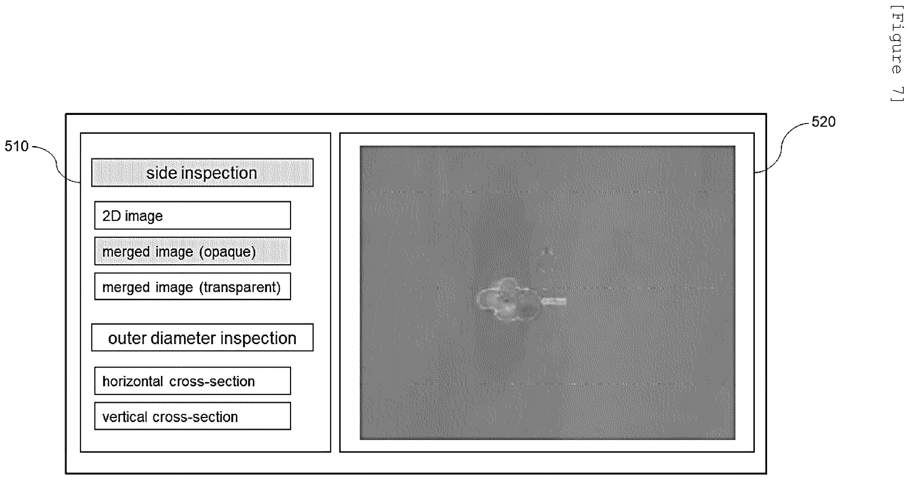

FIG. 7 is an example of a screen when [opaque merged image output mode] of the side inspection mode is selected. Referring to FIG. 7, when a selection signal for [opaque merged image output mode] is received, the visual inspection apparatus may output a second image of the outer lateral surface area of the cylindrical battery through the window for diagnostic image output 520. Meanwhile, although FIG. 7 shows a screen on which the second image of the outer lateral surface of the battery is output, but the second image of the upper or lower surface of the battery may be output, or the second images of the outer lateral surface, the upper surface, and lower surface of the battery may be output together.

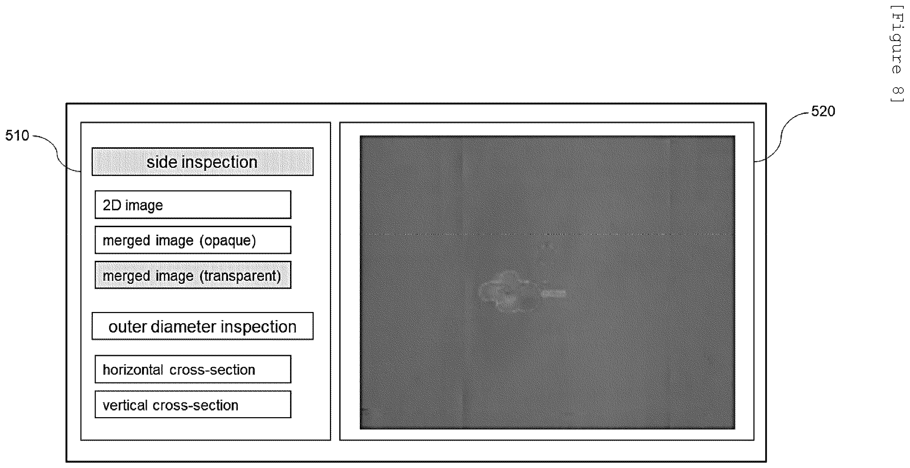

FIG. 8 is an example of a screen when [transparent merged image output mode] of the side inspection mode is selected. Referring to FIG. 8, when a selection signal for [transparent merged image output mode] is received, the visual inspection apparatus may output a third image of the outer lateral surface area of the cylindrical battery through the window for diagnostic image output 520. Here, the third image may be an image that is visualized by overlapping the second image with a preset transparency on the first image. Here, transparency may be varied through a setting change signal input by the user.

The third image according to embodiments of the present invention may be a diagnostic image in which a first image and a second image are overlapped with a certain transparency, wherein the first image is an image in which the outer surface of the battery is visually expressed and the second image is an image in which the depth information of the outer surface of the battery is visually expressed (expressed in color in FIG. 8). When the third image is output through the display device, a user can more intuitively recognize whether the battery appearance is defective and a location of a defect, and thus, inspection efficiency and accuracy can be further improved.

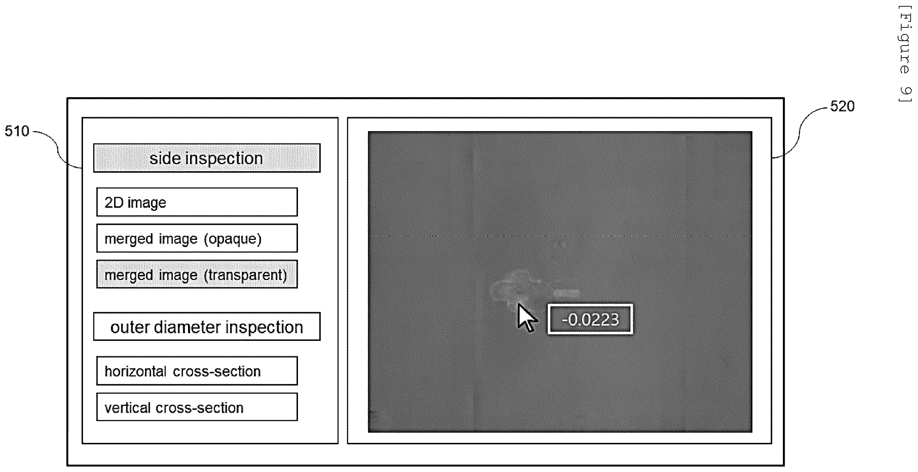

When a selection signal for a specific point in the output diagnostic image is received, the visual inspection apparatus may output a depth value for the specific point through the GUI. For example, referring to FIG. 9, when the third image is output as a diagnostic image and a selection signal for a specific point in the third image input by a user is received, the visual inspection apparatus may output a depth value (-0.0223mm) stored in correspondence with the coordinate information of the selected point on the third image together.

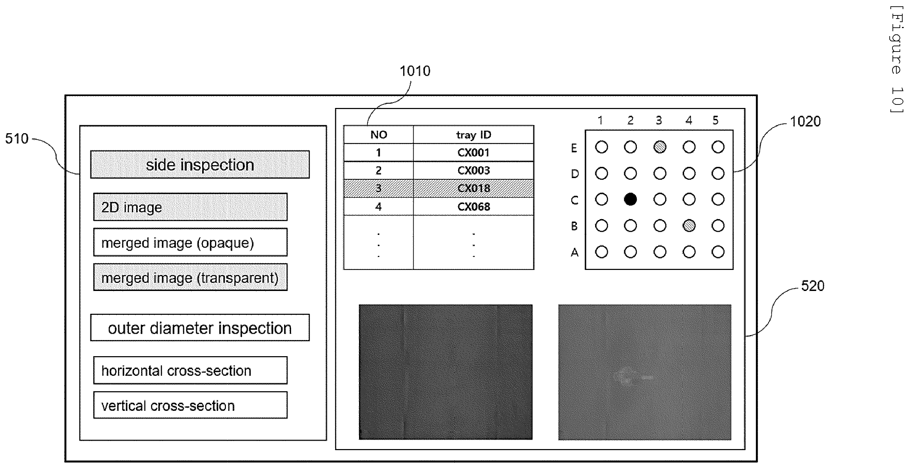

FIG. 10 is an example of a screen which shows an output diagnostic image for a specific battery among a plurality of batteries. Referring to FIG. 10, the visual inspection apparatus may generate a fourth image 1020 in which a tray containing a plurality of batteries is visualized, and output the generated fourth image through the window for diagnostic image output 520. Here, the visual inspection apparatus may output identifiers of the battery trays through a battery tray list 1010 and generate and output a fourth image 1020 for the specific battery tray (e.g., NO 3) selected by a user. As shown in FIG. 10, the fourth image 1020 may include circular icons corresponding to each of the batteries and the icons may be arranged to correspond to the arrangement structure of the batteries on the tray.

When a selection signal for a specific battery in the fourth image 1020 is received, the visual inspection apparatus may output one or more of a first image, a second image, and a third image for the specific battery corresponding to the selection signal. For example, as shown in FIG. 10, when the battery placed in C2 is selected among the 25 batteries and [2D image output mode] and [transparent merged image output mode] are selected together as the image output mode, the visual inspection apparatus may output the first image and the third image together for the selected battery.

The visual inspection apparatus may visualize and output the fourth image 1020 to distinguish between a battery determined to be defective and a normal battery. For example, as shown in FIG. 10, the visual inspection apparatus may visualize and output the color of the icons for the defective batteries B4 and E3 to be different from the color of icons for normal batteries. Meanwhile, differently from what is shown in FIG. 10, the visual inspection apparatus may visualize and output one or more of the sizes and shapes of the icon of the defective battery and the icon of the normal battery differently, so that the defective battery and the normal battery can be distinguished from each other.

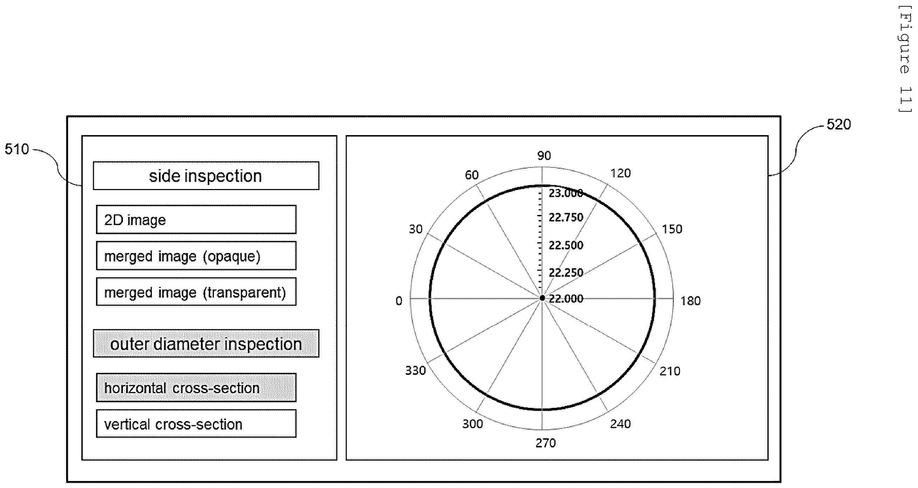

FIG. 11 is an example of a screen when [horizontal cross-sectional image output mode] of the outer diameter inspection mode is selected. Referring to FIG. 11, when a selection signal for [horizontal cross-sectional image output mode] is received, the visual inspection apparatus may calculate the outer diameter value of the cylindrical battery using 3D shape data. Thereafter, the visual inspection apparatus may generate a fifth image in which the calculated outer diameter value is visualized in the form of a horizontal cross-section and output the generated fifth image through the window for diagnostic image output 520. Here, the fifth image may be an image in which the outer diameter value for each angle of the horizontal cross section is visualized in the form of a circle or semicircle. Meanwhile, in order to further improve the visibility of the outer diameter value, the center point of a circle or semicircle may be defined as a specific value other than [0]. For example, the specific value may be defined as a value multiplied by 0.8 to 0.95 of a normal outer diameter value.

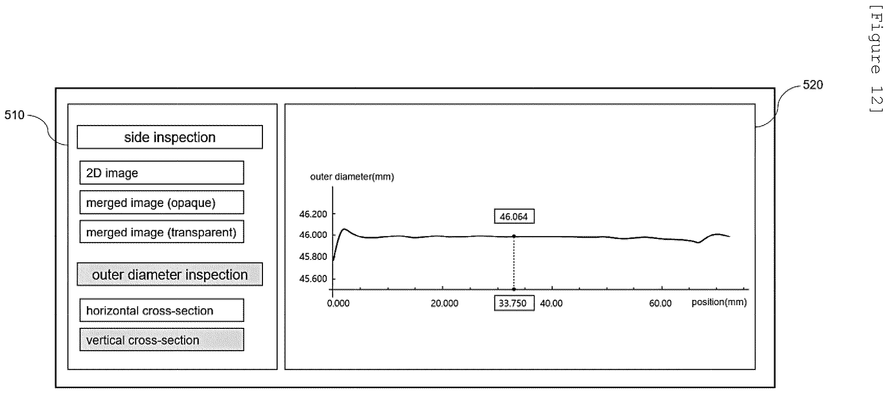

FIG. 12 is an example of a screen when [vertical cross-sectional image output mode] of the outer diameter inspection mode is selected. Referring to FIG. 12, when a selection signal for [vertical cross-sectional image output mode] is received, the visual inspection apparatus may calculate an outer diameter value for the cylindrical battery using 3D shape data. Thereafter, the visual inspection apparatus may generate a sixth image in which the calculated outer diameter value is visualized in the form of a vertical cross-section and output the generated sixth image through the window for diagnostic image output 520.

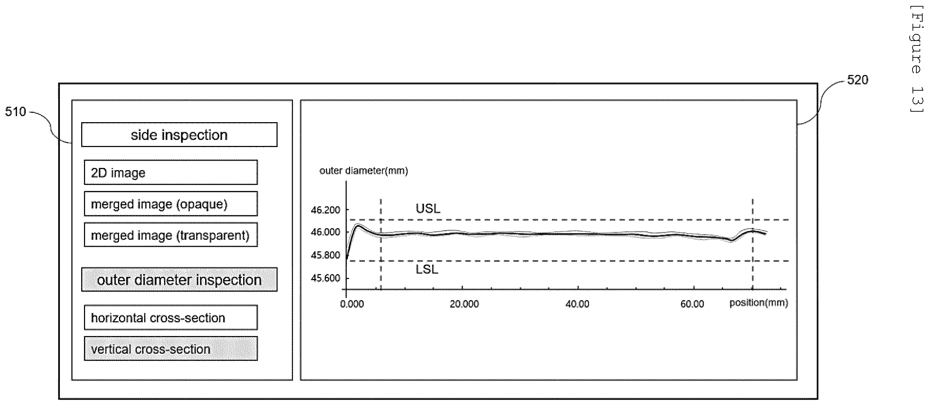

In the embodiment, the visual inspection apparatus may visualize reference information about the outer diameter value and output it by overlapping it with the fifth image or the sixth image. Here, the reference information may include one or more of the minimum, the maximum, and an average value of the outer diameter values, the upper specification limit (USL) and the lower specification limit (LSL) for the outer diameter value. For example, referring to FIG. 13, when outputting the sixth image, the visual inspection apparatus may display a graph of the minimum and maximum values of the outer diameter value, and straight lines indicating the upper specification limit (USL) and lower specification limit (LSL) together.

In the embodiments, the fifth or sixth image may be generated based on the cumulative outer diameter values of a plurality of batteries. For example, the visual inspection apparatus may calculate an average value of the outer diameter values of a plurality of batteries and generate a fifth image or a sixth image based on the calculated average value.

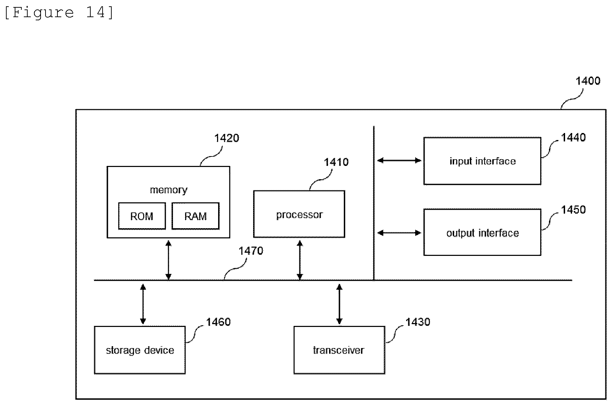

FIG. 14 is a block diagram of a data processing apparatus according to embodiments of the present invention. Here, the data processing apparatus may correspond to the visual inspection apparatus 130 of FIG. 1 or may correspond to a part included in the visual inspection apparatus 130.

The data processing apparatus 1400 according to embodiments of the present invention may include at least one processor 1410, a memory 1420 that stores at least one instruction executed by the at least one processor, and a transceiver that is connected to a network and performs communication.

The at least one instruction may include an instruction to generate a first image which visually presents a battery surface based on a captured image of an outer surface of a battery; an instruction to generate a second image in which depth information of the outer surface of the battery is visually presented by matching the first image with three-dimensional shape data about the outer surface of the battery; and an instruction to output one or more of the first image and the second image through a predefined graphical user interface (GUI).

The instruction to generate the first image may include an instruction to receive a two-dimensional image of an outer lateral surface of a cylindrical battery; and an instruction to flatten the outer lateral surface of a cylindrical shape by applying a predefined distortion correction algorithm to the received two-dimensional image.

The instruction to generate the second image may include an instruction to calculate depth information for each plane coordinate of the first image using the 3D shape data; and an instruction to generate the second image by mapping the calculated depth information to each of the plane coordinates.

The second image may be a two-dimensional image in which depth information on the outer surface of the battery is represented in color.

The instruction to output one or more of the first image and the second image through the GUI may include an instruction to output one or more of the first image, the second image, and a third image in which the first image and the second image are overlapped, according to an image output mode selected by a user.

The third image may be an image that is visualized with the second image overlapped to the first image with a preset transparency.

The instruction to output one or more of the first image and the second image through the GUI may include an instruction to, upon receiving a selection signal for the specific point in an output image, output a depth value for a specific point through the GUI.

The instruction to output one or more of the first image and the second image through the GUI may include an instruction to generate and output a fourth image in which a tray containing a plurality of batteries is visualized; and an instruction to, upon receiving a selection signal for a specific battery in the fourth image, output the first image or the second image for a specific battery corresponding to the selection signal.

The instruction to generate and output a fourth image may include an instruction to visualize and output a battery determined to be defective and a normal battery to be distinguished from each other.

The at least one instruction may include an instruction to calculate an outer diameter value for a cylindrical battery using the three-dimensional shape data; an instruction to generate one or more of a fifth image in which the calculated outer diameter value is visualized in the form of a horizontal cross section and a sixth image in which the calculated outer diameter value is visualized in the form of a vertical cross section; and an instruction to output one or more of the fifth image and the sixth image through the GUI.

The instruction to output one or more of the fifth image and the sixth image through the GUI may include an instruction to visualize reference information, including one or more of the minimum value, the maximum value, an average value of the calculated outer diameter values, and the upper specification limit and lower specification limit for the outer diameter value, and an instruction to output the reference information by overlapping the reference information with the output image.

The data processing apparatus 1400 may further include an input interface device 1440, an output interface device 1450, a storage device 1460, etc. Respective components included in the data processing apparatus 1400 may be connected by a bus 1470 and can communicate with each other.

Here, the processor 1410 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A data processing apparatus for visual inspection of batteries, the data processing apparatus comprising:
at least one processor; and
a memory configured to store at least one instruction executed by the at least one processor,
wherein the at least one instruction includes:
an instruction to generate a first image which visually presents a battery surface based on a captured image of an outer surface of a battery;
an instruction to generate a second image in which depth information of the outer surface of the battery is visually presented by matching the first image with three-dimensional shape data about the outer surface of the battery; and
an instruction to output one or more of the first image and the second image through a predefined graphical user interface GUI.

2. The data processing apparatus of claim 1, wherein the instruction to generate the first image includes:
an instruction to receive a two-dimensional image of an outer lateral surface of a cylindrical battery; and
an instruction to flatten the outer lateral surface of a cylindrical shape by applying a predefined distortion correction algorithm to the received two-dimensional image.

3. The data processing apparatus of claim **1,** wherein the instruction to generate the second image includes:
an instruction to calculate depth information for each plane coordinate of the first image using the three-dimensional shape data; and
an instruction to generate the second image by mapping the calculated depth information to each of the plane coordinates.

4. The data processing apparatus of claim 1, wherein the second image is a two-dimensional image in which depth information on the outer surface of the battery is represented in color.

5. The data processing apparatus of claim 1, wherein the instruction to output one or more of the first image and the second image through the GUI includes an instruction to output one or more of the first image, the second image, and a third image in which the first image and the second image are overlapped, according to an image output mode selected by a user.

6. The data processing apparatus of claim 5, wherein the third image is an image that is visualized with the second image overlapped to the first image with a preset transparency.

7. The data processing apparatus of claim 1, wherein the instruction to output one or more of the first image and the second image through the GUI includes an instruction to, upon receiving a selection signal for the specific point in an output image, output a depth value for a specific point through the GUI.

8. The data processing apparatus of claim 1, wherein the instruction to output one or more of the first image and the second image through the GUI includes:
an instruction to generate and output a fourth image in which a tray containing a plurality of batteries is visualized; and
an instruction to, upon receiving a selection signal for a specific battery in the fourth image, output the first image or the second image for a specific battery corresponding to the selection signal.

9. The data processing apparatus of claim 8, wherein the instruction to generate and output a fourth image includes an instruction to visualize and output a battery determined to be defective and a normal battery to be distinguished from each other.

10. The data processing apparatus of claim 1, wherein the at least one instruction includes:
an instruction to calculate an outer diameter value for a cylindrical battery using the three-dimensional shape data;
an instruction to generate one or more of a fifth image in which the calculated outer diameter value is visualized in the form of a horizontal cross section and a sixth image in which the calculated outer diameter value is visualized in the form of a vertical cross section; and
an instruction to output one or more of the fifth image and the sixth image through the GUI.

11. The data processing apparatus of claim 10, wherein the instruction to output one or more of the fifth image and the sixth image through the GUI includes an instruction to visualize reference information, including one or more of the minimum value, the maximum value, an average value of the calculated outer diameter values, and the upper specification limit and lower specification limit for the outer diameter value, and an instruction to output the reference information by overlapping the reference information with an output image.

12. A data processing method for visual inspection of batteries, the data processing method comprising:
generating a first image which visually presents a battery surface based on a captured image of an outer surface of a battery;
generating a second image in which depth information of the outer surface of the battery is visually presented by matching the first image with three-dimensional shape data about the outer surface of the battery; and
outputting one or more of the first image and the second image through a predefined graphical user interface GUI.

13. The data processing method of claim 12, wherein the generating the first image includes:
receiving a two-dimensional image of an outer lateral surface of a cylindrical battery; and
flattening the outer lateral surface of a cylindrical shape by applying a predefined distortion correction algorithm to the received two-dimensional image.

14. The data processing method of claim 12, wherein the generating the second image includes:
calculating depth information for each plane coordinate of the first image using the three-dimensional shape data; and
generating the second image by mapping the calculated depth information to each of the plane coordinates.

15. The data processing method of claim 12, wherein the second image is a two-dimensional image in which depth information on the outer surface of the battery is represented in color.

16. The data processing method of claim 12, wherein the outputting one or more of the first image and the second image through the GUI includes outputting one or more of the first image, the second image, and a third image in which the first image and the second image are overlapped, according to an image output mode selected by a user.

17. The data processing method of claim 16, wherein the third image is an image that is visualized with the second image overlapped to the first image with a preset transparency.

18. The data processing method of claim 12, wherein the outputting one or more of the first image and the second image through the GUI includes upon receiving a selection signal for the specific point in an output image, outputting a depth value for a specific point through the GUI.

19. The data processing method of claim 12, wherein the outputting one or more of the first image and the second image through the GUI includes:
generating and outputting a fourth image in which a tray containing a plurality of batteries is visualized; and
upon receiving a selection signal for a specific battery in the fourth image, outputting the first image or the second image for a specific battery corresponding to the selection signal.

20. The data processing method of claim 19, wherein the generating and outputting a fourth image includes visualizing and outputting a battery determined to be defective and a normal battery to be distinguished from each other.

21. The data processing method of claim 12, further comprising:
calculating an outer diameter value for a cylindrical battery using the three-dimensional shape data;
generating one or more of a fifth image in which the calculated outer diameter value is visualized in the form of a horizontal cross section and a sixth image in which the calculated outer diameter value is visualized in the form of a vertical cross section; and
outputting one or more of the fifth image and the sixth image through the GUI.

22. The data processing method of claim 21, wherein the outputting one or more of the fifth image and the sixth image through the GUI includes visualizing reference information, including one or more of the minimum value, the maximum value, an average value of the calculated outer diameter values, and the upper specification limit and lower specification limit for the outer diameter value, and outputting the reference information by overlapping the reference information with an output image.
